# EUROPÄISCHE PATENTSCHRIFT

(11) **EP 1 518 065 B1**
(45) Veröffentlichungstag und Bekanntmachung des Hinweises auf die Patenterteilung: **16.11.2005**
(21) Anmeldenummer: 03740300.3
(22) Anmeldetag: 21.06.2003
(51) Int. Cl.: F16H 61/24, F16H 63/38

(54) **SCHALTEINRICHTUNG**
SHIFTING DEVICE
DISPOSITIF DE CHANGEMENT DE VITESSE

(30) Priorität: 29.06.2002 DE 10229320
(43) Veröffentlichungstag der Anmeldung: 30.03.2005
(73) Patentinhaber: ZF FRIEDRICHSHAFEN AG, 88038 Friedrichshafen (DE)
(72) Erfinder: BEER, Uwe, 14476 Fahrland (DE); DRABEK, Michael, 14778 Schenkenberg (DE)
(86) Internationale Anmeldenummer: PCT/EP2003/006562
(87) Internationale Veröffentlichungsnummer: WO 2004/003406

(56) Entgegenhaltungen:
- WO-A-91/00448
- DE-A- 10 016 364
- DE-A- 19 653 171

## Beschreibung

Die Erfindung betrifft eine Schalteinrichtung nach dem Oberbegriff von Anspruch 1. Eine solche Schalteinrichtung ist aus DE-A-100 16 364 bekannt.

Bei Schalteinrichtungen in Handschaltgetrieben mit zentraler Schaltwelle kommen zur Erzeugung von Wähl- und Schaltkräften verschiedene Bauteile im Getriebe zum Einsatz. Die Bauteile dienen insbesondere dazu, den Fahrzeugführer bei der Führung des Schalthebels in den Schaltgassen entsprechend dem Schaltbild zu unterstützen und gleichzeitig durch die Unterstützung eine Beschädigung von Bauteilen im Getriebe zu vermeiden. Der Fahrzeugführer soll ein Gefühl dafür bekommen, in welcher Schaltgasse er sich mit seinem Schalthebel gerade befindet. Besondere Berücksichtigung soll dabei der Übergang in diejenigen Schaltgassen finden, in denen besonders kleine Übersetzungen geschaltet werden oder in denen die Übersetzung für den Rückwärtsgang geschaltet wird. Würde ein zu kleines Übersetzungsverhältnis oder der Rückwärtsgang geschaltet, ohne dass die Fahrzeugbedingungen dies zulassen, insbesondere aufgrund einer zu hohen Geschwindigkeit bei der eingeleiteten Fahrtrichtungsumkehr ohne Stillstand des Fahrzeugs, so würde die Schalteinrichtung und besonders die Synchronisierungen Schaden nehmen.

Aus der EP 0 479 876 B1 ist eine als Hebel ausgebildeten Wählschwinge, in deren Nabe die Wähl- bzw. Schaltwelle über in axial verlaufenden Führungsnuten der Nabe eingreifende Wälzkörper drehfest und axial verschiebbar ausgeführt ist, ist gegen die Kraft wenigstens eines gehäusefesten Federelements aus ihrer Neutral- in eine Wählstellung verschwenkbar. Die Lagerung der als Hebel ausgebildeten Wählschwinge auf der Wähl- bzw. Schaltwelle ist sehr aufwendig ausgebildet. In der Wähl- bzw. Schaltwelle müssen Durchmesserreduzierungen vorgenommen werden, um die Wälzkörper aufzunehmen, was zu einer Beeinträchtigung der Stabilität führen kann.

Der Erfindung liegt die Aufgabe zugrunde, eine Schalteinrichtung aufzuzeigen, die die Nachteile des Standes der Technik beseitigt.

Die Aufgabe wird gelöst durch eine Schalteinrichtung mit den Merkmalen des Anspruchs 1. Ausgestaltungen sind Gegenstand von Unteransprüchen.

Bei einer Schalteinrichtung für ein mehrgängiges Zahnräder-Wechselgetriebe eines Kraftfahrzeuges mit einer zentralen Wähl- bzw. Schaltwelle, die im Getriebegehäuse verdrehbar und axial verschiebbar angeordnet ist, wird durch die Verdrehung der Wähl- bzw. Schaltwelle jeweils eine in einer Schaltgasse zu betätigende Schiebemuffe angewählt und durch die anschließende axiale Verschiebung die Gangstufe geschaltet. Zur Ausbildung von Wählkraftverläufen ist an der Wähl- bzw. Schaltwelle oder einer von der Wähl- bzw. Schaltwelle angesteuerten Hilfswelle eine Vorrichtung vorgesehen, die eine Stange hält. Die Stange steht mit einem im Getriebegehäuse schwenkbar angeordneten Konturelement, beispielsweise einem Hebel, in Wirkverbindung. Das Konturelement weist eine die Wählkraftverläufe nachbildende Kontur auf, die von einem Federelement angefedert auf die Stange einwirkt. Bei einer Verdrehung der Wähl- bzw. Schaltwelle, was einem Wählvorgang entspricht, gleitet die Stange an der Kontur des Konturelements entlang. Je nach Gestaltung der Kontur und damit je nach gewünschtem Wählkraftverlauf muss dabei bei der Verdrehung der Wähl- bzw. Schaltwelle eine größere bzw. kleinere Kraft aufgebracht werden, indem das Konturelement gegen das Federelement gedrückt wird. Hierdurch kann sehr direkt die Wählkraft an der Kontur abgenommen werden. Durch Anpassung der Kontur sind beliebige Wählkraftverläufe darstellbar. Das Wählmoment wird unabhängig von der axialen Lage der Wähl- bzw. Schaltwelle oder einer von der Wähl- bzw. Schaltwelle angesteuerten Hilfswelle zu dem Konturelement übertragen. Daraus ergibt sich in einer vorteilhaften Ausgestaltung, dass die Vorrichtung auf der Wähl- bzw. Schaltwelle oder einer von der Wähl- bzw. Schaltwelle angesteuerten Hilfswelle axial verschiebbar angeordnet ist und die Stange axial relativ zum Konturelement nicht verschoben wird. In einer anderen vorteilhaften Ausgestaltung ist auf der Stange eine drehbare Rolle vorgesehen, die axial auf der Stange verschiebbar ist und mit der Kontur des Konturelements zusammenwirkt und die Vorrichtung selbst auf der Wähl- bzw. Schaltwelle oder einer von der Wähl- bzw. Schaltwelle angesteuerten Hilfswelle axial fest ist. Dadurch wird eine sehr geringe Reibung zwischen der Stange und der Kontur gewährleistet. Die Rolle rollt an der Kontur ab und kann gleichzeitig auf der Stange axial verschoben werden, bzw. die Stange kann axial innerhalb der Rolle verschoben werden. Das ist besonders vorteilhaft ausgebildet, wenn die Rolle an ihrem Umfang eine Nut aufweist, in die die Kontur des Konturelements eingreift, so dass die Rolle axial von der Kontur am Konturelement gehalten wird. Dadurch sind geringe Reibkräfte bei gleichzeitigem Wählen und Schalten durch Nutzung allseitig beweglicher Rastierelemente gegeben. Die Kosten der Schalteinrichtung und der erforderliche Bauraum fallen besonders günstig aus, wobei wenig Bauelemente benötigt werden. Eine weitere vorteilhafte Ausgestaltung zeigt die Kontur mit ihrer tiefsten Ausbuchtung an einer Neutralstellung, die einer unbetätigten Ruheposition eines Schalthebels in einer Wählgasse entspricht. Der Schalthebel im Schaltbild fällt unbetätigt und ohne dass eine Gangstufe geschaltet ist in eine Position in der Wählgasse, die üblicherweise der Position der Schaltgasse für den dritten/vierten Gang entspricht. Diese Gassenarretierung der Wähl- bzw. Schaltwelle wird aus der Federkraft des auf die Kontur einwirkenden Federelementes bewirkt.

Den Wähl- und Schaltkomfort beeinträchtigende Einflüse aus dem Federelement werden durch das Konturelement nicht auf die Wähl- bzw. Schaltwelle übertragen.

Die Erfindung wird anhand einer Zeichnung näher erläutert.
Es zeigen:
- Fig. 1: eine Wähl- bzw. Schaltwelle mit daran angeordneter Vorrichtung und
- Fig. 2: eine von einer Wähl- bzw. Schaltwelle angesteuerte Hilfswelle mit daran angeordneter Vorrichtung.

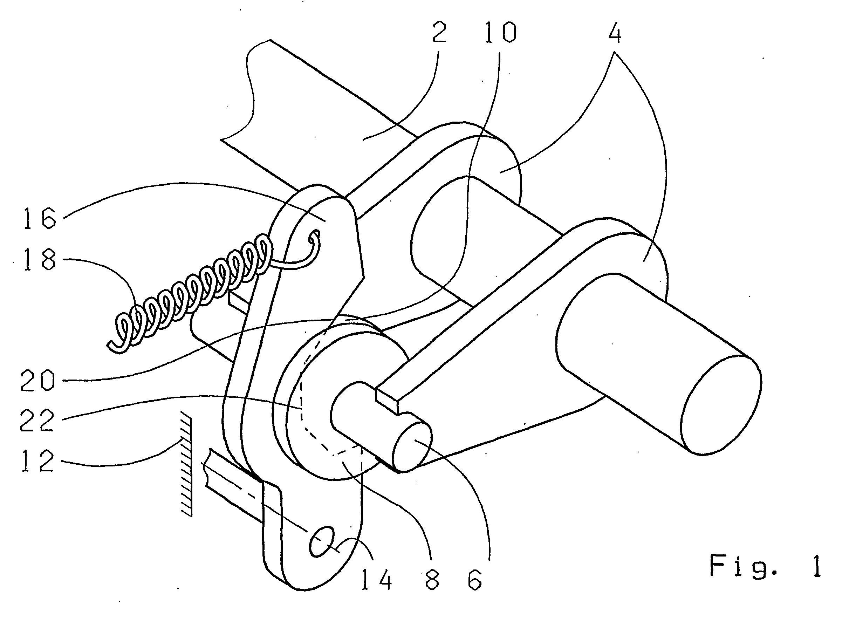

Die Fig. 1 zeigt eine Wähl- bzw. Schaltwelle 2, an der in einer Vorrichtung zwei Rollenarme 4 in einem Abstand zueinander drehfest und axial nicht verschiebbar angeordnet sind. Die beiden Rollenarme 4 halten gemeinsam eine Stange 6, die mit den beiden Rollenarmen 4 fest verbunden ist. Auf der Stange 6 drehbar und axial verschiebbar ist eine Rolle 8 vorgesehen. Die Rolle 8 weist an ihrem Umfang eine Nut 10 auf. In einem Getriebegehäuse 12 ist ein um eine Achse 14 schwenkbarer Hebel 16 angeordnet. Der Hebel 16 stützt sich durch ein Federelement 18 am Getriebegehäuse 12 ab. In einem mittleren Bereich weist der Hebel eine Kontur 20 auf, die entsprechend des gewünschten Wählkraftverlaufes ausgebildet ist. Die tiefste Ausbuchtung 22 der Kontur 20 entspricht der Neutralstellung eines hier nicht gezeigten und mit der Wähl- bzw. Schaltwelle 2 verbundenen Schalthebels. Die Kontur 20 des Hebels 16 greift in die Rinne 10 der Rolle 8 ein, wodurch die Rolle 8 in ihrer axialen Position auf der Stange 6 fixiert wird. Bei einer Verdrehung der Wähl- und Schaltwelle 2 rollt die Rolle 8 auf der Kontur 20 des Hebels 16 ab, während die Rolle 8 sich um der Stange 6 dreht. Je nach Ausbildung der Kontur wird bei der Verdrehung das Federelement mehr oder weniger stark belastet, d.h. der Fahrzeugführer spürt bei der Verdrehung der Wähl- bzw. Schaltwelle 2 durch den Schalthebel eine mehr oder weniger große Gegenkraft und kann darüber ein Gefühl für die Schaltgasse erfahren, in die er beim Wählen den Schalthebel gerade gebracht hat. Wird darüber hinaus die Wähl- bzw. Schaltwelle 2 axial verschoben, so wird die Stange 6 innerhalb der Rolle 8 verschoben und die Rolle 8 an der Kontur 20 des Hebels 16 radial und axial geführt, ohne dass dabei große Reibung entsteht.

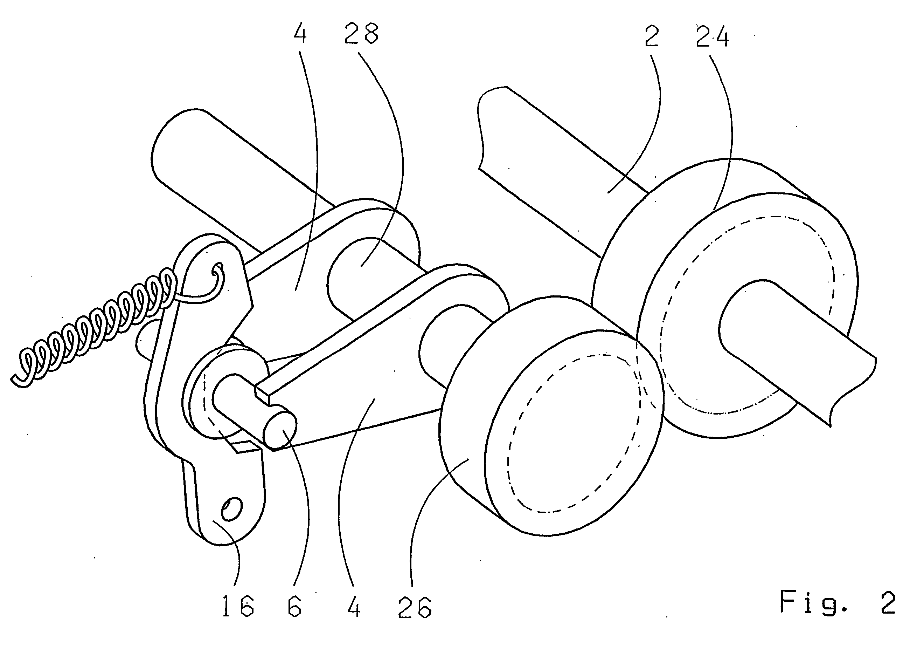

Die Fig. 2 zeigt eine Wähl- bzw. Schaltwelle 2, auf der ein Zahnrad 24 drehfest angeordnet ist. Mit dem Zahnrad 24 kämmt ein Zahnrad 26 auf einer Hilfswelle 28, so dass bei einem Verdrehen der Wähl- bzw. Schaltwelle 2 auch die Hilfswelle 28 gedreht wird. Die Verzahnungen an den Zahnrädern 24 und 26 überdecken sich soweit, dass die Verzahnungen auch bei einem axialen Verschieben weiterhin miteinander kämmen. Die sonstige Anordnung von Rollenarmen 4, Stange 6 und Hebel 16 entsprechen der Fig. 1.

### Bezugszeichen

- 2: Wähl- bzw. Schaltwelle
- 4: Rollenarm
- 6: Stange
- 8: Rolle
- 10: Nut
- 12: Getriebegehäuse
- 14: Achse
- 16: Konturelement
- 18: Federelement
- 20: Kontur
- 22: Ausbuchtung
- 24: Zahnrad
- 26: Zahnrad
- 28: Hilfswelle

## Patentansprüche

1. Schalteinrichtung für ein mehrgängiges Zahnräder-Wechselgetriebe eines Kraftfahrzeuges mit einer zentralen Wähl- bzw. Schaltwelle (2), die im Getriebegehäuse (12) verdrehbar und axial verschiebbar angeordnet ist, wobei durch deren Verdrehung jeweils eine in einer Schaltgasse zu betätigende Schaltkupplung anwählbar ist und durch deren anschließende axiale Verschiebung Gangstufen schaltbar sind und an der Wäht- bzw. Schaltwelle (2) oder einer von der Wähl- bzw. Schaltwelle angesteuerten Hilfswelle (28) eine Vorrichtung (4) vorgesehen ist, die eine Stange (6) hält, welche mit einem im Getriebegehäuse (12) schwenkbar angeordneten Konturelement (16) in Wirkverbindung steht, und das Konturelement (16) eine Wählkraftverläufe nachbildende Kontur (20) aufweist, die von einem Federelement (18) angefedert auf die Stange (6) wirkt, auf der eine drehbare Rolle (8) vorgesehen ist, die mit der Kontur (20) des Konturelements (16) zusammenwirkt, **dadurch** gekenn- zeichnet, dass die Rolle (8) axial auf der Stange (6) verschiebbar ist.

2. Schalteinrichtung nach Anspruch 1, **dadurch gekennzeichnet, dass** die Rolle (8) an ihrem Umfang eine Nut (10) aufweist, in die die Kontur (20) des Konturelements (16) eingreift.

3. Schalteinrichtung nach einem der Ansprüche 1 oder 2, **dadurch gekennzeichnet, dass** die Kontur (20) die tiefste Ausbuchtung (22) an einer Neutralstellung aufweist, die einer unbetätigten Ruheposition eines Schalthebels in einer Wählgasse entspricht.

## Claims

1. Gearchange device for a multiple-gear gearchange box in a motor vehicle with a central selector shaft or gearchange shaft (2), which is arranged in the gearbox housing (12) to be rotatable and axially movable, and by rotating it a gearchange clutch to be operated in a gearchange gate can be selected each time and by subsequently moving it axially, gears can be changed and on the selector shaft or gearchange shaft (2) or an auxiliary shaft (28) controlled by the selector shaft or gearchange shaft a device (4) is provided which holds a rod (6) which is in operative connection with a contoured element (16) arranged swivellably in the gearbox housing (12), and the contoured element (16) has a contour (20) reproducing variations in selection force which, with spring loading from a spring element (18), acts on the rod (6), on which a rotatable roller (8) is provided, which cooperates with the contour (20) of the contoured element (16), **characterised in that** the roller (8) is movable axially on the rod (6).

2. Gearchange device according to claim 1, **characterised in that** the roller (8) has a groove (10) on its periphery, in which the contour (20) of the contoured element (16) engages.

3. Gearchange device according to any one of claims 1 or 2, **characterised in that** the contour (20) has the deepest recess (22) at a neutral position, which corresponds to the rest position of a gearchange lever in a gearchange gate when the lever has not been operated.

## Revendications

1. Dispositif de commande de changement pour une boîte de vitesses à engrenages à plusieurs vitesses d'un véhicule automobile comprenant un arbre de sélection et de changement central (2) qui est monté rotatif et mobile en translation axiale dans le carter (12) de la boîte de vitesses, dans lequel un embrayage de changement à actionner dans une piste de changement peut être sélectionné par rotation de cet arbre, et les vitesses peuvent être changées par une translation axiale consécutive de cet arbre, et dans lequel il est prévu, sur l'arbre de sélection et de changement (2), ou sur un arbre auxiliaire (28) commandé par l'arbre de sélection et de changement, un dispositif (4) qui porte une tige (6), laquelle est en liaison active avec un élément profilé (16) monté pivotant dans le carter (12) de la boîte de vitesses, l'élément profilé (16) présentant un profil (20) qui reproduit des courbes de variation de la force de sélection et qui agit, sous la sollicitation élastique d'un élément élastique (18), sur la tige (6) sur laquelle est prévu un galet rotatif (8) qui coopère avec le profil (20) de l'élément profilé (16), **caractérisé en ce que** le galet (8) est mobile en translation axiale sur la tige (6).

2. Dispositif de changement selon la revendication 1, **caractérisé en ce que** le galet (8) présente à sa périphérie une gorge (10) dans laquelle s'engage le profil (20) de l'élément profilé (16).

3. Dispositif de changement selon l'une des revendications 1 ou 2, **caractérisé en ce que** le profil (20) présente son creux (22) le plus profond à la position de point mort, qui correspond à une position de repos non actionnée d'un levier de changement dans une piste de sélection.
